(19) Europäisches Patentamt
European Patent Office
Office européen des brevets

(11) Publication number: **0 021 809**
**A1**

(12) **EUROPEAN PATENT APPLICATION**

(21) Application number: 80302090.8

(22) Date of filing: 20.06.80

(51) Int. Cl.[3]: C 22 B 3/00
C 22 B 7/00, C 22 B 7/02
C 22 B 19/22

(30) Priority: 22.06.79 GB 7921892

(43) Date of publication of application:
07.01.81 Bulletin 81/1

(84) Designated Contracting States:
BE DE FR IT

(71) Applicant: NATIONAL RESEARCH DEVELOPMENT CORPORATION
P.O. Box 236 Kingsgate House 66-74 Victoria Street
London SW1E 6SL(GB)

(72) Inventor: Fray, Derek John
157 Shelford Road
Trumpington Cambridge(GB)

(72) Inventor: Thomas, Bernard Kenneth
33 Allens Lane
Pelsall Near Walsall West Midlands(GB)

(74) Representative: Neville, Peter Warwick
Patent Department National Research Development
Corporation P.O. Box 236 Kingsgate House
66-74 Victoria Street London SW1E 6SL(GB)

(54) **Chloride leaching.**

(57) Leaching an element having a water-soluble chloride stable in the presence of oxygen out of material containing the element, comprising leaching the material with an aqueous substantially saturated chlorine solution, to give an aqueous solution of the chloride of the element.

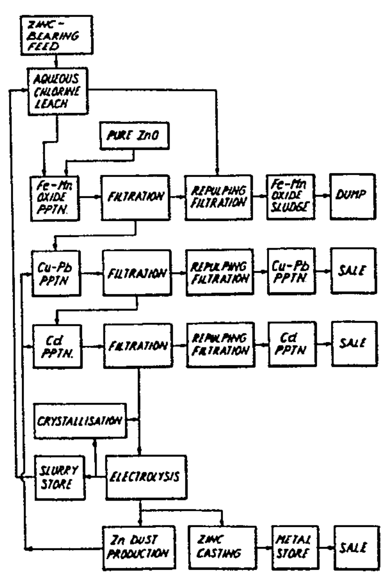


EP 0 021 809 A1

118233

CHLORIDE LEACHING

This invention relates to leaching an element having a water-soluble chloride out of material containing the element. Examples of such materials are ores, scrap and residues, e.g. lead sulphide ores, die-cast alloys (containing zinc) and copper- and nickel- bearing materials.

For ease of description, the invention will be described in relation to zinc.

Steel scrap when treated in an electric arc furnace gives rise to dust which is mainly zinc ferrite, together with copper, tin and lead oxides. Secondary copper smelters yield a fume or residue containing similar materials. When these materials are leached with sulphuric acid and electrolysed, the tin causes a drop in ampere efficiency at the cathode, and the iron and silica both go into solution and the techniques for their removal give gelatinous precipitates which are difficult to treat. In the pyrometallurgical route, the tin is transferred to the zinc and is damaging to the mechanical properties of zinc.

Some sources of zinc, such as foundry flux residues, contain chloride and if used directly in a zinc sulphate electrolytic cell the halides attack the anode. A chloride route for zinc recovery would therefore be desirable. However, leaching zinc-bearing scrap, residue or oxidic ore with hydrochloric acid is slow and wasteful, and would also leach out iron and aluminium. Zinc sulphide ores are not recommended for this invention at ordinary pressures.

According to the invention, an element having a water-soluble chloride stable in the presence of oxygen is leached out of material containing it by an aqueous substantially saturated chlorine solution (preferably in the

presence of chlorine hydrate), to give an aqueous solution of the chloride of the element. Suitable elements therefore include lead, zinc, copper, nickel and tin but not iron and aluminium. The chlorine hydrate is preferably present in excess, i.e. there is more than enough to saturate the water with chlorine.

Chlorine hydrate is a yellow solid with low chlorine vapour pressure formed below 9°C (at 1 atmosphere) by reacting chlorine with vapour or aqueous zinc chloride (below 30 weight %). The approximate formula is $Cl_2.6H_2O$ and the equation of its formation is

$$Cl_2 + 6H_2O \leftrightharpoons Cl_2.6H_2O.$$

The leaching reactions, returning to the case of zinc, may be represented as

$$ZnO + 2Cl_2(aq) \rightarrow 2ZnCl_2 + O_2\uparrow$$

for oxidic ores, and as

$$2ZnFe_2O_4 + 2Cl_2(aq) \rightarrow 2ZnCl_2 + 2Fe_2O_3 + O_2\uparrow$$

for a zinc ferrite residue.

In both the oxidic materials and the zinc ferrite residues, alkali metals and lead are present and will go into solution with the zinc, but iron, which is also present and which would be wholly dissolved in a sulphuric acid leach, typically here dissolves to only a small extent (less than 7% of the iron in the starting material). In addition, the leachant is preferably saturated with oxygen, as this is found to decrease the iron extracted to 4 - 5%.

The solution obtained from the chlorine hydrate leaching is a chloride solution, containing, apart from the desired zinc ion, impurity metals such as some iron, tin, manganese, copper, lead and cadmium. This chloride solution is relatively easy to purify, for example by treatment with zinc oxide dust

and chlorine to precipitate iron and manganese oxides, and by treatment with zinc dust to precipitate the copper, tin, lead and cadmium. Unlike hydrochloric acid leaching, any aluminium present is oxidised to insoluble aluminium oxide by the chlorine hydrate leachant. Similarly, the strongly oxidising conditions in the leachant prevent the dissolution of iron oxide.

In subsequent electrolysis of the resulting aqueous zinc chloride the electrolyte may contain up to 20 weight % of the chloride salts of Group I or ammonia, without affecting the zinc electrowinning process, but with considerable lowering of the working cell voltage, and preferably the electrolysis is according to our UK Patent Application 7921893, wherein aqueous zinc chloride below $35^{o}C$ at pH 2 - 3.5 of a concentration of 15 - 35 weight % is electrolysed with gas agitation at a current density exceeding $1000A/m^2$ to yield coherent zinc at the cathode.

The zinc chloride concentration may be from 15 to 35 weight percent, preferably from 20 to 30 weight percent, most preferably from 24 to 26 weight percent. Above and below this range hydrogen evolution at the cathode may become considerable at the high operating current densities. In addition, the electrolyte may accommodate up to 15 g/litre of Group II cations without undue effect on zinc electrowinning. The electrolyte pH must lie between pH2 and pH3.5.

This electrolyte may be used in an electrowinning cell operating at current densities exceeding $2500Am^{-2}$, at least six times the current densities used in commercial zinc sulphate cells and still yielding a coherent product. The anode reaction is the formation of chlorine hydrate (or, above 9C at 1 atmosphere, evolution of chlorine gas). The chlorine hydrate is held as a slurry in the electrolyte and can be

pumped, rather than having to collect a gas. It is also advantageous that the $ZnCl_2$ solution has a low viscosity and is readily pumped.

The temperature of the electrolyte should not exceed $35^oC$ to avoid degradation of the zinc deposit, but the cell may operate satisfactorily down to $0^oC$, preferably not exceeding $9^oC$, conveniently $5^oC - 9^oC$.

Under these operating conditions the electrolyte may contain up to 100 mg/litre of high molecular weight proteinaceous additive (MW $\gtrsim$ 50 000) such as gum arabic. Gas sparging of the electrolyte may be used to effect the desirable vigorous agitation of the electrolyte. The sparging gas may be air, nitrogen or oxygen without detriment.

The cathode blank material may be aluminium, or an aluminium alloy. The anode may be for example graphite, or $RuO_2$ or $LaO_2$ or Pt on a titanium base, a so-called Dimensionally Stable Anode (D.S.A.). The current may be intermittently reversed in the cell (so-called periodic current reversal). Suitable conditions may be a forward:reverse time of 15:1.

The cell may be separated into anode and cathode compartments with a porous diaphragm which prevents solid chlorine hydrate from passing from the anode, where it is formed, to the cathode. This chlorine hydrate may advantageously be recycled to the leaching stage, and, as a material, chlorine hydrate slurry is relatively convenient to handle. The spent electrolyte may be crystallised to remove such salts as Group I and II chlorides, which may accumulate to excess in the electrolyte, and after purification by this crystallisation the electrolyte is recycled to the electrolysis.

The invention will now be described by way of example with reference to the accompanying drawing, which is a flow-chart of a zinc recovery scheme utilising the invention.

EXAMPLE 1

Rotherham flue dust is a zinc ferrite containing 30.4% Fe, 21.4% Zn, 8.2% Pb, 2.6% Mn, 4.3% CuO, 3.6% $SiO_2$, 1.39% Na, 1.00% K and 0.58% S. (Crushed and ball-milled zinc oxide ores behaved quite similarly). The as-received flue dust has a particle size of 0.7 microns.

The flue dust was leached with a slurry of chlorine hydrate prepared at 1 atmosphere in distilled water. The total chlorine concentration was 0.03 moles/litre and the leaching temperature was 3.5°C.

After 90 minutes of leaching, 92% of the zinc had been extracted, but only 6.8% of the iron. This is about an order of magnitude faster than conventional (sulphuric) leaching. Alkali metals and lead are extracted with 100% efficiency.

Since, for ultra-pure zinc, the concentration of metals more noble than zinc must be below 1 part per million of the zinc in the solution which will be electrolysed to obtain the desired zinc at the cathode, the lead (and other such impurities, e.g. copper and cadmium) is removed by cementation with zinc dust at 120°C. Any iron and manganese which are leached out are precipitated (by displacement) as their oxides by treatment with ZnO and chlorine at 120°C.

The resulting solution was filtered and made up to 20 weight % of $ZnCl_2$, and 10 weight % $NH_4Cl$ were added to improve the conductivity (which became about 0.16 $ohm^{-1}cm^{-1}$). Impurities in parts per million were, after this treatment, less than: Sb 1.6, Cu 0.16, Co 0.32, Fe 1.6, Pb 0.64, Mn 0.64 and Ti 0.32.

The solution was electrolysed in a cell having an aluminium cathode and a platinised titanium anode. The cell was kept at a temperature of 5°C. Chlorine hydrate evolved at the anode (which, unlike graphite, survives this) floated to the top of a slurry store containing also zinc chloride and was removed, for

recycling to the leaching stage. In order to improve the quality of the deposit, air sparging was used and 40 mg/l of gum arabic added to the electrolyte. 10 mg/l KF were also added so as to improve adherence.

The cell was run at a current density of 2700 A per square metre of cathode, requiring 3.95V and recovering zinc with a current efficiency of 85%. By operating the cell under conditions of periodic current reversal the cathodic current efficiency was increased to 92% at a current density of 3020A per square metre of cathode. In this case the forward time/reverse time was twenty/one seconds.

The purity of the cathodic zinc was 99.99%. Zinc dust, made by distilling and condensing the zinc, was recycled to the lead etc. cementation stages, and the rest made up for sale. The cemented lead, copper and cadmium were also recovered for sale.

EXAMPLE 2

A commercial zinc die cast alloy to BS1004A has the composition 4.3% Al, < 0.01% Cu, 0.045% Mg, 0.1% Fe, 0.007% Pb, 0.005. Sn.

A sample of this alloy was leached with a 10 weight % zinc chloride solution at 4°C containing chlorine hydrate slurry. The chlorine (neglecting $Cl^-$ from the zinc chloride) was 0.025 moles per litre. The zinc was leached from the alloy at a rate of 0.402 mg per square centimeter per minute. After seven hours of leaching, the zinc chloride solution contained 12 ppm Al and 8 ppm Fe from the alloy as the major impurities.

Following purification with zinc dust as before, electrolysis of the solution resulted in the electrowinning of zinc of 99.99% purity at the cathode.

EXAMPLE 3

This Example relates to leaching a deep sea nodule. An

analysis of the nodule is: Cu 1.4%, Fe 5.59%, Ni 0.83%, Co 0.108%, Mn 33.92%, Pb 0.039%, Mo 0.063%, Na 1.76% Zn 0.16%, Ti 0.28%.

As a result of economic pressures, manganese would preferably not be extracted into solution, but rather, interest centres upon the valuable elements cobalt, nickel and copper.

The leachant used was either chlorine hydrate ($< 8^oC$) or distilled water saturated with chlorine ($> 10^oC$). 'Large scale' runs used a 2 litre contained and mechanical stirrer. Each run took 3 hours.

Extraction from the massive nodule was very poor but improved with ball milling. In addition, better extraction was obtained by leaching at room temperature than at $3^oC$.

On the 'large scale', problems were encountered keeping the material suitably agitated, accounting for the lower extraction rate.

For Run 6, the ball milled material was pre-reduced in a $CO/CO_2/N_2$ mixture at $650^oC$ for 4 hours. The composition of the gas was adjusted by passing it over $MnO_2$ before contacting with the ball milled nodule. It can be seen that there is a considerable improvement in metal extraction although the concentration of manganese in the leach has increased. Dué to the low concentration of cobalt, it was impossible to analyse with meaningful accuracy for cobalt in the solution.

The results were as follows:

| | EXTRACTION (%) | | | |
|---|---|---|---|---|
| RUN | Cu | Ni | Mn | Fe |
| 1 | 22.1 | 4.49 | 0.002 | 1.38 |
| 2 | 57.1 | 30.80 | 4.200 | 21.08 |
| 3 | 88.0 | 36.20 | 1.850 | 23.70 |
| 4 | 35.8 | 11.40 | 0.130 | 1.03 |
| 5 | 36.9 | 17.20 | 0.100 | 0.37 |
| 6 | 100.0 | 70.00 | 16.700 | 36.30 |

**Notes** -

Run 1. Massive nodule, 5°C
Run 2. Ball-milled material, 5°C
Run 3. " " " 20°C
Run 4. " " " , large scale, 3°C
Run 5. " " " " " 20°C
Run 6. " " " , pre-reduced 20°C

CLAIMS

1. Leaching an element having a water-soluble chloride stable in the presence of oxygen out of material containing the element, comprising leaching the material with an aqueous substantially saturated chlorine solution, to give an aqueous solution of the chloride of the element.

2. Leaching according to claim 1, wherein the aqueous chlorine solution is in the presence of chlorine hydrate.

3. Leaching according to claim 2, wherein there is more than enough chlorine hydrate to saturate the water with chlorine.

4. Leaching according to any preceding claim, wherein the aqueous chlorine solution is saturated with oxygen.

5. Leaching according to any preceding claim, wherein the element is any of of lead, zinc, copper, nickel and tin.

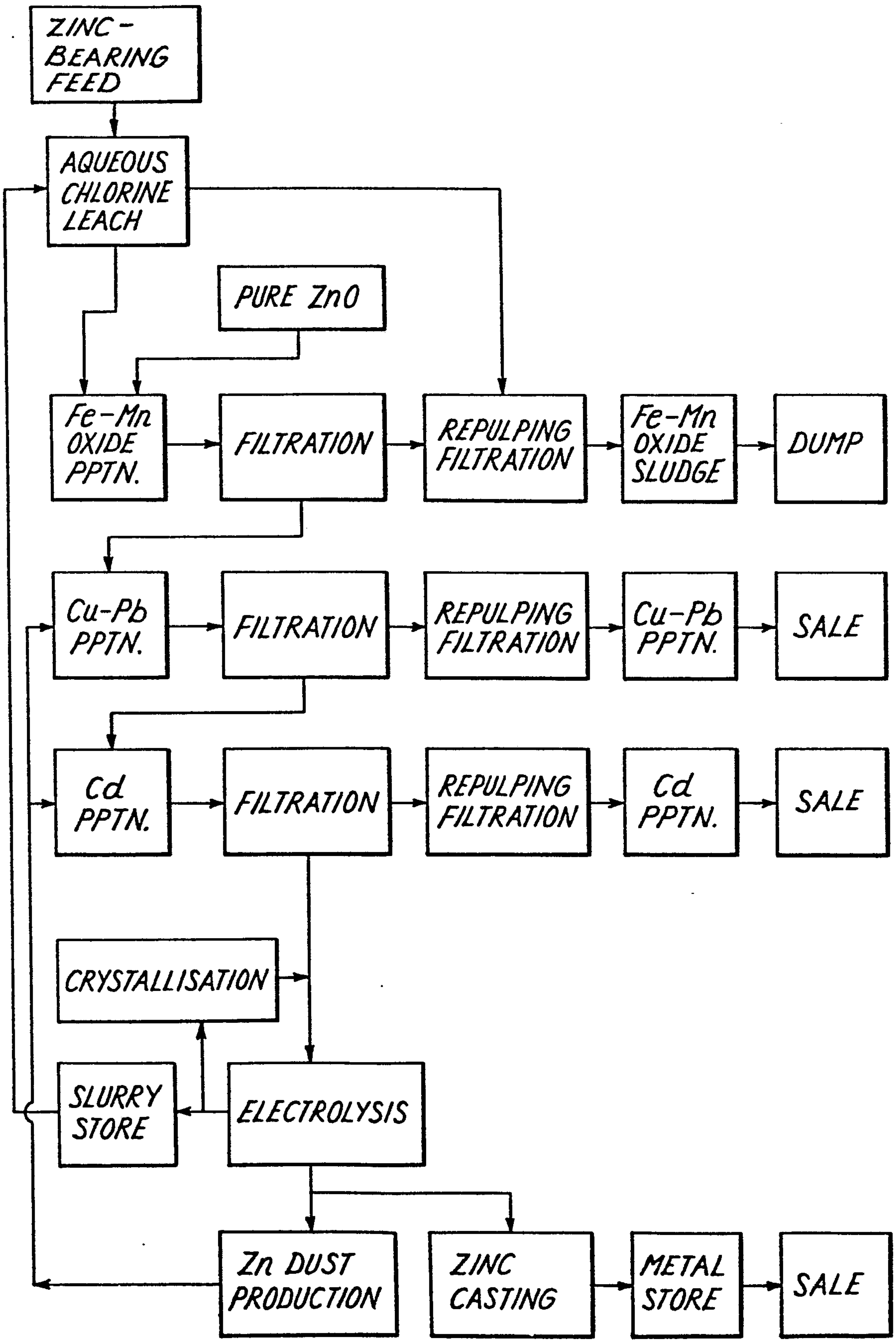
ZINC-BEARING FEED
AQUEOUS CHLORINE LEACH
PURE ZnO
Fe-Mn OXIDE PPTN.
FILTRATION
REPULPING FILTRATION
Fe-Mn OXIDE SLUDGE
DUMP
Cu-Pb PPTN.
FILTRATION
REPULPING FILTRATION
Cu-Pb PPTN.
SALE
Cd PPTN.
FILTRATION
REPULPING FILTRATION
Cd PPTN.
SALE
CRYSTALLISATION
SLURRY STORE
ELECTROLYSIS
Zn DUST PRODUCTION
ZINC CASTING
METAL STORE
SALE

European Patent Office

# EUROPEAN SEARCH REPORT

Application number
EP 80 30 2090

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | US - A - 3 981 962 (G.A. SMYRES)<br>* Claims *<br>-- | 1,4,5 | C 22 B 3/00<br>7/00<br>7/02<br>19/22 |
| | FR - A - 2 340 376 (MINEMET RECHERCHE)<br>* Claims *<br>-- | 1,5 | |
| | DE - C - 307 085 (DR. REISENEGGER)<br>* Patent in full *<br>-- | 1,5 | **TECHNICAL FIELDS SEARCHED (Int.Cl. 3)** |
| A | FR - A - 2 346 456 (DEXTEC METALLURGICAL PTY. LTD.) | | C 22 B 3/00<br>7/00<br>7/02<br>19/22<br>C 01 G 3/05<br>3/06<br>9/04<br>53/09 |
| A | FR - A - 2 146 299 (INTERNATIONAL NICKEL) | | |
| A | FR - A - 2 130 115 (FALCONBRIDGE NICKEL MINES LTD.) | | |
| A | FR - A - 334 941 (A.E.G.)<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-09-1980 | JACOBS |